# EUROPÄISCHE PATENTSCHRIFT

(11) **EP 1 015 269 B1**
(45) Veröffentlichungstag und Bekanntmachung des Hinweises auf die Patenterteilung: **07.11.2001**
(21) Anmeldenummer: 98947370.7
(22) Anmeldetag: 01.08.1998
(51) Int. Cl.: B60K 37/02, B60Q 3/04, G01R 1/08

(54) **ANZEIGEVORRICHTUNG**
DISPLAY DEVICE
DISPOSITIF D'AFFICHAGE

(30) Priorität: 15.09.1997 DE 19740575
(43) Veröffentlichungstag der Anmeldung: 05.07.2000
(73) Patentinhaber: ROBERT BOSCH GMBH, 70442 Stuttgart (DE)
(72) Erfinder: KNOLL, Peter, D-76275 Ettlingen (DE); SYBRICHS, Ralf, D-71254 Ditzingen (DE); HERZOG, Bernhard, D-70619 Stuttgart (DE)
(86) Internationale Anmeldenummer: DE9802202
(87) Internationale Veröffentlichungsnummer: WO9914070

(56) Entgegenhaltungen:
- DE-A- 4 023 693
- DE-A- 19 500 668

## Beschreibung

### STAND DER TECHNIK

Die vorliegende Erfindung betrifft eine Anzeigevorrichtung, und insbesondere eine Anzeigevorrichtung für ein Kombiinstrument eines Kraftfahrzeugs.

Obwohl auf beliebige Anzeigevorrichtungen anwendbar, wie z.B. Anzeigevorrichtungen für Schiffe, Flugzeuge usw., werden die vorliegende Erfindung sowie die ihr zugrundeliegende Problematik in bezug auf eine Anzeigevorrichtung für ein Kombiinstrument eines Kraftfahrzeugs erläutert.

Elektronische Kombiinstrumente von Kraftfahrzeugen weisen in der Regel eine Mehrzahl von Anzeigevorrichtungen auf, die in einem gemeinsamen Gehäuse untergebracht sind und von der Vorderseite vom Fahrer durch eine transparente Deckscheibe ablesbar sind. Bei solchen elektronischen Kombiinstrumenten sind üblicherweise analoge Zeigeranzeigeeinrichtungen und digitale Anzeigeeinrichtungen vorgesehen.

Bei analogen Zeigeranzeigeeinrichtungen wird ein auf einer Welle angebrachter Zeiger mittels eines gesteuerten Zeigerantriebs zur analogen Darstellung einer Information, z.B. Geschwindigkeit, Drehzahl, Kühlwassertemperatur, Öltemperatur, Tankfüllstand und dergleichen, auf einem zugehörigen Zifferblatt bzw. einer Skaleneinrichtung angetrieben.

Seit einiger Zeit werden als digitale Anzeigeeinrichtungen in solchen Kombiinstrumenten von Kraftfahrzeugen elektrooptische Anzeigeeinrichtungen (auch als Displays bezeichnet) zur Darstellung beliebiger Informationen, wie z.B. Warnfunktionen, Radioanzeige, Telefonanzeige, Verkehrleitinformation usw., eingesetzt.

Hierzu wurden bisher vornehmlich Leuchtdiodenanzeigen bzw. LEDs (LED = Light Emitting Diode) verwendet. Weiterhin werden Flüssigkristallanzeigen bzw. LCDs (LCD = Liquid Crystal Display) verwendet und in Einzelfällen auch schon Vakuum-Fluoreszenz-Anzeigen bzw. VFDs (VFD = Vacuum Fluorescence Display) oder sogar andere exotische bekannte Technologien für Anzeigeeinrichtungen, wie z.B. Plasmaanzeigen.

Aus Gründen ihres mechanischen Aufbaus, insbesondere der elektrischen Kontaktierung, haben diese Displays meist einen Rand, der seitlich über die nutzbare Anzeigefläche übersteht. Typischerweise weist dieser Randbereich eine Größe von 5 - 15 mm auf.

In den betreffenden Kombiinstrumenten befinden sich nun solche Displays direkt benachbart zu Zeigeranzeigen mit Zifferblättern bzw. Skalen, die bei Nacht von der Rückseite aus zu beleuchten sind, um eine gute Ablesbarkeit und ein ansprechendes Design zu erzielen. Gleichzeitig sollten aus Designgründen die Zifferblätter bzw. Skalen näherungsweise in derselben Ebene wie die Displays angeordnet sein.

Der oben erwähnte Rand der Displays erlaubt es dabei aber nicht, die unmittelbar benachbarten Bereiche von der Rückseite mit den üblichen Verfahren, wie z.B. mit Lichtleitern (DE 42 42 913 von MOTOMETER) oder mit Lichtschächten (DE 44 22 828 von SAGEM) einheitlich zu beleuchten.

Als nachteilhaft bei solchen Kombiinstrumenten hat sich also die Tatsache herausgestellt, daß die Beleuchtung von der Rückseite her nicht einheitlich und dementsprechend nicht ästhetisch gestaltbar ist. Auch ist der Rand der Displays bisher nicht genutzter Platz auf der beschränkten Fläche des Kombiinstruments.

Eine gattungsgemässe Anzeigevorrichtung ist aus DE-A-4 023 693 bekannt.

### VORTEILE DER ERFINDUNG

Die erfindungsgemäße Anzeigevorrichtung mit den Merkmalen des Anspruchs 1 weist den Vorteil auf, daß eine Überlappung der Skaleneinrichtung und der elektrooptischen Anzeigeeinrichtung möglich ist, wobei gleichzeitig eine einheitliche Beleuchtung gewährleistet ist.

Dadurch entsteht eine bessere Kompaktheit für die mechanische Konstruktion und zudem ist die erfindungsgemäße Anzeigevorrichtung ästhetischer gestaltbar. Besonders vorteilhaft ist die erfindungsgemäße Anzeigevorrichtung, wenn größere Displays verwendet werden, welche einen Großteil der Fläche des Kombiinstruments für sich beanspruchen. Die sich dabei ergebende geringe Restfläche für Zifferblätter kann dann effizienter genutzt werden. Darüber hinaus ist es möglich, beliebig gestaltete Bereiche der Displayfläche mit Zifferblättern zu maskieren und einheitlich mit dem Rest des Zifferblatts zu beleuchten.

Die der vorliegenden Erfindung zugrundeliegende Idee besteht darin, daß auf der Skaleneinrichtung eine dünne Leuchtschicht angebracht ist, mittels derer der die elektrooptische Anzeigeeinrichtung überdeckende Abschnitt der Skaleneinrichtung sowie der Rest der Skaleneinrichtung jeweils wenigstens teilweise beleuchtbar sind.

In den jeweiligen Unteransprüchen finden sich vorteilhafte Weiterbildungen und Verbesserungen der in Anspruch 1 angegebenen Anzeigevorrichtung.

Gemäß einer bevorzugten Weiterbildung weist die elektrooptische Anzeigeeinrichtung in ihrem von der Skaleneinrichtung überdeckten Abschnitt einen Anzeigebereich auf.

Gemäß einer weiteren bevorzugten Weiterbildung ist der die elektrooptische Anzeigeeinrichtung überdeckende Abschnitt der Skaleneinrichtung bereichsweise durchscheinend oder durchsichtig oder ausgespart, so daß das Erscheinungsbild der Skaleneinrichtung durch den Anzeigebereich der elektrooptischen Anzeigeeinrichtung beeinflußbar ist. Dies bringt den besonderen Vorteil, daß die Skalen entsprechend den Betriebsbedingungen des Fahrzeugs oder entsprechend den Wünschen des Fahrers durch entsprechende Ansteuerung der elektrooptischen Anzeigeeinrichtung veränderbar sind.

Gemäß einer weiteren bevorzugten Weiterbildung weist die Skaleneinrichtung eine transparente Kunststoffscheibe und eine auf einer Seite aufgedruckte Skalenschicht auf.

Gemäß einer weiteren bevorzugten Weiterbildung ist die Skalenschicht auf der vom Betrachter abgewandten Seite aufgedruckt. Diese Gestaltung sorgt für einen einheitlichen Tiefeneindruck hinsichtlich Skaleneinrichtung und elektrooptischer Anzeigeeinrichtung für den Betrachter.

Gemäß einer weiteren bevorzugten Weiterbildung ist die Leuchtschicht auf der Skalenschicht aufgebracht.

Gemäß einer weiteren bevorzugten Weiterbildung ist die Leuchtschicht eine Elektrolumineszenz-Leuchtschicht.

Gemäß einer weiteren bevorzugten Weiterbildung ist die Elektrolumineszenz-Leuchtschicht in eine Elektrolumineszenz-Folie integriert, welche vorzugsweise eine Dicke im Bereich von 0,3 - 0,6 mm hat. Damit entstehen nur minimale Unebenheiten zwischen der Skaleneinrichtung und der elektrooptischen Anzeigeeinrichtung.

Gemäß einer weiteren bevorzugten Weiterbildung weist die analoge Anzeigeeinrichtung einen mechanischen Zeiger auf, der eine über der Skaleneinrichtung befindliche, dem Betrachter zugewandte Ebene überstreicht.

Gemäß einer weiteren bevorzugten Weiterbildung weist die elektrooptische Anzeigeeinrichtung eine Leuchtdiodenanzeige und/oder eine Vakuum-Fluoreszenz-Anzeige auf.

Gemäß einer weiteren bevorzugten Weiterbildung weist die elektrooptische Anzeigeeinrichtung eine Flüssigkristallanzeige auf.

Gemäß einer weiteren bevorzugten Weiterbildung bilden die Polarisationsfilterschicht der Flüssigkristallanzeige und der Träger der Leuchtschicht eine Einheit. Dies vereinfacht den mechanischen Aufbau der Anzeigevorrichtung.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Draufsicht zur Erläuterung einer Ausführungsform der erfindungsgemäßen Anzeigevorrichtung als Bestandteil eines Kombiinstruments eines Kraftfahrzeuges; und
- Fig. 2: eine Querschnittsansicht auf die Ausführungsform der erfindungsgemäßen Anzeigevorrichtung entlang der Linie A - A' von Fig. 1.

### BESCHREIBUNG DER AUSFÜHRUNGSBEISPIELE

In den Figuren bezeichnen gleiche Bezugszeichen gleiche oder funktionsgleiche Bestandteile.

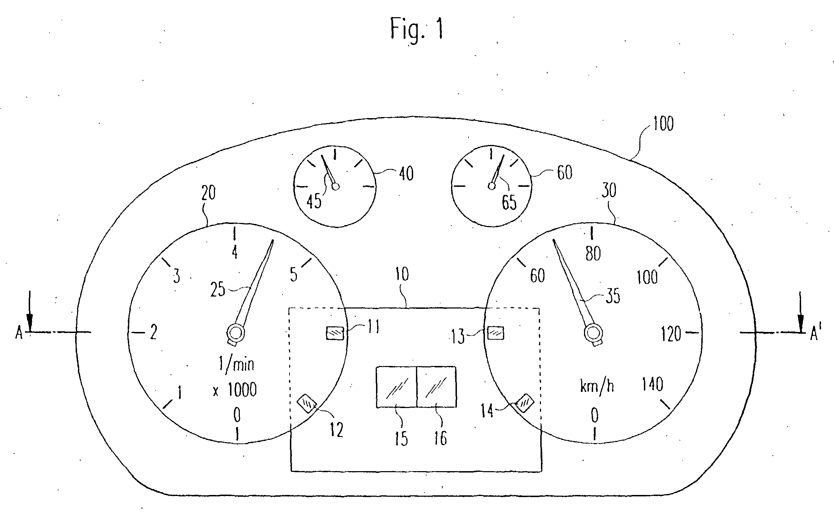

Fig. 1 zeigt eine schematische Draufsicht zur Erläuterung einer Ausführungsform der erfindungsgemäßen Anzeigevorrichtung als Bestandteil eines Kombiinstruments eines Kraftfahrzeuges.

In Fig. 1 bezeichnet 100 ein Kombiinstrument eines Kraftfahrzeuges, 10 eine elektrooptische Anzeigeeinrichtung in Form einer Flüssigkristallanzeige, 11 - 16 verschiedene Anzeigebereiche der Flüssigkristallanzeige 10, 20 eine erste Skaleneinrichtung, 25 einen Zeiger für die erste Skaleneinrichtung 20, 30 eine zweite Skaleneinrichtung, 35 einen Zeiger für die zweite Skaleneinrichtung 30, 40 eine dritte Skaleneinrichtung, 45 einen Zeiger für. die dritte Skaleneinrichtung 40, 60 eine vierte Skaleneinrichtung und 65 einen Zeiger für die vierte Skaleneinrichtung 60.

Die erste Skaleneinrichtung 20 bildet zusammen mit dem Zeiger 25 eine Drehzahlanzeige. Die zweite Skaleneinrichtung 30 bildet zusammen mit dem Zeiger 35 eine Geschwindigkeitsanzeige. Die dritte Skaleneinrichtung 40 bildet zusammen mit dem Zeiger 45 eine Tankanzeige. Die vierte Skaleneinrichtung 60 bildet zusammen mit dem Zeiger 55 eine Kühlmitteltemperaturanzeige.

Wie durch die gestrichelten Linien in Fig. 1 dargestellt, überdeckt jeweils ein Abschnitt der Skaleneinrichtungen 20, 30 einen entsprechenden Abschnitt der Flüssigkristallanzeige 10. In diesen Abschnitten sind in der Flüssigkristallanzeige 10 jeweils zwei Anzeigebereiche 11, 12 bzw. 13, 14 vorgesehen, welche durch entsprechend gestaltete Fenster in der betreffenden Skaleneinrichtung 20 bzw. 30 für den Betrachter sichtbar sind.

Hinsichtlich der Drehzahlanzeige ermöglicht dies, daß der Zeiger 25 die momentane Drehzahl anzeigt, wobei auf der Skaleneinrichtung 20 der Hinweisbereich für zu hohe Drehzahlen variabel ansteuerbar ist, und zwar z.B. gemäß dem Motortyp, den Betriebsparametern des Motors usw.. Mit anderen Worten kann beispielsweise der Anzeigebereich 11 entweder eine rote oder.eine grüne "6" anzeigen und der Anzeigebereich 12 entweder eine rote oder eine grüne "7".

Hinsichtlich der Geschwindigkeitsanzeige ermöglicht dies, daß der Zeiger 35 die momentane Geschwindigkeit anzeigt, wobei der Hinweisbereich für zu hohe Geschwindigkeiten bzw. für eine Tempomatstellung variabel ansteuerbar ist. Mit anderen Worten kann beispielsweise der Anzeigebereich 13 entweder eine rote oder eine grüne "40" anzeigen und der Anzeigebereich 14 entweder eine rote oder eine grüne "20".

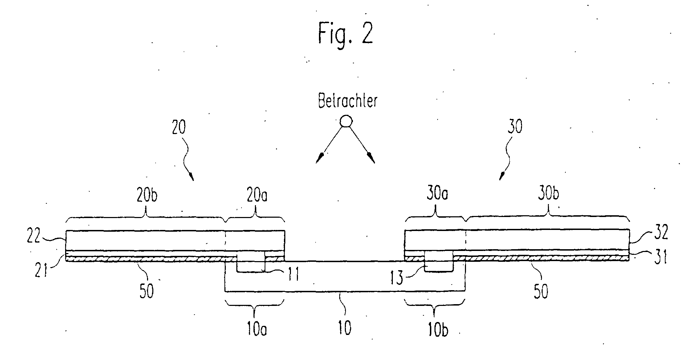

Fig. 2 illustriert eine Querschnittsansicht auf die Ausführungsform der erfindungsgemäßen Anzeigevorrichtung entlang der Linie A - A' von Fig. 1.

In Fig. 2 bezeichnen 10a, 10b von der Skaleneinrichtung 20 bzw. 30 überlappte Abschnitte der Flüssigkristallanzeige 10. 20a, 30a bezeichnen überlappende Abschnitte der Skaleneinrichtung 20 bzw. 30, und 20b, 30b bezeichnen nicht-überlappende Abschnitte der Skaleneinrichtung 20 bzw. 30. 21 bezeichnet die Skalenschicht der ersten Skaleneinrichtung 20 und 22 eine transparente Kunststoffscheibe der ersten Skaleneinrichtung 20. 31 bezeichnet die Skalenschicht der zweiten Skaleneinrichtung 30 und 32 eine transparente Kunststoffscheibe der ersten Skaleneinrichtung 20. 50 schließlich bezeichnet eine Elektrolumineszenz-Leuchtschicht in Form einer Elektrolumineszenz-Folie, welche vorzugsweise eine Dicke im Bereich von 0,3 - 0,6 mm hat und auf der vom Betrachter abgewndten Seite der Skalenschicht 21 bzw. 31 aufgebracht, zweckmäßigerweise aufgeklebt, ist.

Deutlich erkennbar ist, daß der jeweilige die Flüssigkristallanzeige 10 überdeckende Abschnitt 20a, 30a der Skaleneinrichtung 20 bzw. 30 bereichsweise durchsichtig, d.h. die Leuchtschicht 50 und die Skalenschicht 21 bzw. 31 sind ausgespart, so daß das Erscheinungsbild der jeweiligen Skaleneinrichtung 20 bzw. 30 durch den Anzeigebereich 11 bzw. 13 beeinflußbar ist. Mit anderen Worten bilden die Anzeigebereiche 11 bzw. 13 die oben erwähnten variablen Ziffern "6" bzw. "40" der Skaleneinrichtungen 20 bzw. 30. Was darin konkret dargestellt wird, ist über eine (nicht gezeigte) elektronische Steuereinrichtung vorgebbar.

Durch diesen Aufbau, insbesondere durch die derart angebrachte Leuchtschicht 50 lassen sich der jeweilige die Flüssigkristallanzeige 10 überdeckende Abschnitt 20a, 30a der Skaleneinrichtung 20 bzw. 30 sowie der jeweilige Rest 20b, 30b der Skaleneinrichtung 20 bzw. 30 jeweils wenigstens teilweise einheitlich beleuchten, wobei die Überlappung einen erheblichen Platzvorteil bietet.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere überlappen beim obigen Ausführungsbeispiel nur gewisse Ziffernbereiche der ersten und zweiten Skaleneinrichtung die Flüssigkristallanzeige. Jedoch können auch größere Bereiche überlappen, ja sogar die gesamte Skaleneinrichtung. So lassen sich beispielsweise alle Angaben, die in unmittelbarem Zusammenhang mit der Analoganzeige stehen, variabel darstellen, beispielsweise für verschiedene Maßeinheiten für die Geschwindigkeit, die Temperatur, den Druck usw.. Insbesondere können auch die Bereiche zwischen den Skalierungen farb- und/oder kontrastumschaltbar sein.

Auch kann die Skalenschicht auf der dem Betrachter zugewandten Seite der Kunststoffscheibe aufgebracht sein oder in der Kunststoffscheibe integriert sein, obwohl die gezeigte Ausführungsform den gleichmäßigsten Tiefeneindruck vermittelt.

Obwohl beim gezeigten Beispiel der überlappte Bereich der Flüssigkristallanzeige Anzeigebereiche enthielt, lassen sich die wesentlichen erfindungsgemäßen Vorteile sogar bereits dann erzielen, wenn es sich lediglich um einen überlappten Randbereich der Flüssigkristallanzeige ohne Anzeigebereiche handelt.

Die Elektrolumineszenz-Leuchtfolie kann auch einstückig mit einer Skalenfolie ausgeführt sein, beispielsweise in Form einer gemeinsamen Folie oder eines Laminats mehrerer Folien, die bzw. das vorderseitig mit der Skala und rückseitig mit der Elektrolumineszenzschicht bedruckt ist.

In diesem Zusammenhang sei erwähnt, daß die Flüssigkristallanzeige im allgemeinen einen Rahmen bzw. eine Einfassung aufweist, welche einen Absatz an ihrem Rand erzeugt. In solch einem Fall ist es zweckmäßig, eine solche gemeinsame Folie oder ein solches Laminat mehrerer Folien zu verwenden welche bzw. welches vorzugsweise durch ein Vakuumtiefziehverfahren hergestellt ist, um so einen entsprechenden.Absatz darauf auszubilden. Sonst müßte man ein transparentes Distanzstück auf dem eingefaßten Bereich der Flüssigkristallanzeige verwenden, um den Absatz auszugleichen.

Die Kunststoffscheibe kann im übrigen entfallen, wenn die Folie(n) mit Zifferblattdruck bzw. Leuchtschichtdruck eine ausreichende Steifigkeit haben bzw. ein rückseitiger Zifferblattträger vorgesehen ist.

## Patentansprüche

1. Anzeigevorrichtung eines Kombiinstrumentes (100), insbesondere für ein Kraftfahrzeug, mit einer elektrooptischen Anzeigeeinrichtung (10), mit mindestens einer Skaleneinrichtung (20, 30) für mindestens eine analoge Anzeigeeinrichtung (25, 35), welche benachbart zu der elektrooptischen Anzeigeeinrichtung (10) angeordnet ist, wobei ein Abschnitt (20a, 30a) der Skaleneinrichtung zumindest einen Abschnitt (10a, 10b) der elektrooptischen Anzeigeeinrichtung (10) überdeckt, und mit einer auf der Skaleneinrichtung (20, 30) angebrachten Leuchtschicht (50), mittels derer der die elektrooptische Anzeige überdeckende Abschnitt (20a, 30a) der Skaleneinrichtung (20, 30) sowie der Rest (20b, 30b) der Skaleneinrichtung (20, 30) jeweils wenigstens teilweise beleuchtbar sind, **dadurch gekennzeichnet, dass** die elektrooptische Anzeigeeinrichtung (10) Anzeigebereiche außerhalb einer Überdeckung durch die Skalenenrichtung (20, 30) aufweist.

2. Anzeigevorrichtung nach Anspruch 1, **dadurch gekennzeichnet, daß** die elektrooptische Anzeigeeinrichtung (10) in ihrem von der Skaleneinrichtung (20; 30) überdeckten Abschnitt (10a; 10b) einen Anzeigebereich (11; 13) aufweist.

3. Anzeigevorrichtung nach Anspruch 2, **dadurch gekennzeichnet, daß** der die elektrooptische Anzeigeeinrichtung (10) überdeckende Abschnitt (20a; 30a) der Skaleneinrichtung (20; 30) bereichsweise durchscheinend und/oder durchsichtig und/oder ausgespart ist, so daß das Erscheinungsbild der Skaleneinrichtung (20; 30) durch den Anzeigebereich (11; 13) der elektrooptischen Anzeigeeinrichtung (10) beeinflußbar ist.

4. Anzeigevorrichtung nach einem der vorhergehenden Ansprüche, **dadurch gekennzeichnet, daß** die Skaleneinrichtung (20; 30) eine transparente Kunststoffscheibe (22; 32) und eine auf einer Seite aufgedruckte Skalenschicht (21; 31) aufweist.

5. Anzeigevorrichtung nach Anspruch 4, **dadurch gekennzeichnet, daß** die Skalenschicht (21; 31) auf der vom Betrachter abgewandten Seite aufgedruckt ist.

6. Anzeigevorrichtung nach Anspruch 5, **dadurch gekennzeichnet, daß** die Leuchtschicht (50) auf der Skalenschicht (21; 31) aufgebracht ist.

7. Anzeigevorrichtung nach einem der vorhergehenden Ansprüche, **dadurch gekennzeichnet, daß** die Leuchtschicht (50) eine Elektrolumineszenz-Leuchtschicht ist.

8. Anzeigevorrichtung nach Anspruch 7, **dadurch gekennzeichnet, daß** die Elektrolumineszenz-Leuchtschicht (50) in eine Elektrolumineszenz-Folie integriert ist, welche vorzugsweise eine Dicke im Bereich von 0,3 - 0,6 mm hat.

9. Anzeigevorrichtung nach einem der vorhergehenden Ansprüche, **dadurch gekennzeichnet, daß** die analoge Anzeigeeinrichtung (25; 35) einen mechanischen Zeiger aufweist, der eine über der Skaleneinrichtung (20; 30) befindliche, dem Betrachter zugewandte Ebene überstreicht.

10. Anzeigevorrichtung nach einem der vorhergehenden Ansprüche, **dadurch gekennzeichnet, daß** die elektrooptische Anzeigeeinrichtung (10) eine Leuchtdiodenanzeige und/oder eine Vakuum-Fluoreszenz-Anzeige aufweist.

11. Anzeigevorrichtung nach einem der vorhergehenden Ansprüche, **dadurch gekennzeichnet, daß** die elektrooptische Anzeigeeinrichtung (10) eine Flüssigkristallanzeige aufweist.

12. Anzeigevorrichtung nach Anspruch 11, **dadurch gekennzeichnet, daß** die Polarisationsfilterschicht der Flüssigkristallanzeige und der Träger der Leuchtschicht (50) eine Einheit bilden.

## Claims

1. Display device of a combination instrument (100), in particular for a motor vehicle, having an electro-optical display (10), having at least one scale (20, 30) for at least one analogue display (25, 35), which is arranged next to the electro-optical display (10), wherein a portion (20a, 30a) of the scale covers at least a portion (10a, 10b) of the electro-optical display (10), and having a lighting layer (50) which is applied on the scale (20, 30) and by means of which the portion (20a, 30a) of the scale (20, 30) which covers the electro-optical display, as well as the rest (20b, 30b) of the scale (20, 30), can each be at least partially illuminated, **characterized in that** the electro-optical display (10) has display zones outside any coverage by the scale (20, 30).

2. Display device according to Claim 1,
**characterized in that** the electro-optical display (10) has a display zone (11; 13) in its portion (10a; 10b) which is covered by the scale (20; 30).

3. Display device according to Claim 2,
**characterized in that** zones of the portion (20a; 30a) of the scale (20; 30), which covers the electro-optical display (10), are translucent and/or transparent and/or open, so that the appearance of the scale (20; 30) can be influenced by the display zone (11; 13) of the electro-optical display (10).

4. Display device according to one of the preceding claims, **characterized in that** the scale (20; 30) has a transparent plastic disc (22; 32) and a scale layer (21; 31) printed on one side.

5. Display device according to Claim 4,
**characterized in that** the scale layer (21; 31) is printed on the side remote from the observer.

6. Display device according to Claim 5,
**characterized in that** the lighting layer (50) is applied on the scale layer (21; 31).

7. Display device according to one of the preceding claims, **characterized in that** the lighting layer (50) is an electroluminescent lighting layer.

8. Display device according to Claim 7,
**characterized in that** the electroluminescent lighting layer (50) is integrated into an electroluminescent sheet, which preferably has a thickness in the range of from 0.3 to 0.6 mm.

9. Display device according to one of the preceding claims, **characterized in that** the analogue display (25; 35) has a mechanical pointer, which sweeps a plane located above the scale (20; 30) and facing the observer.

10. Display device according to one of the preceding claims, **characterized in that** the electro-optical display (10) has a light-emitting diode display and/or a vacuum fluorescence display.

11. Display device according to one of the preceding claims, **characterized in that** the electro-optical display (10) has a liquid-crystal display.

12. Display device according to Claim 11,
**characterized in that** the polarisation-filter layer of the liquid-crystal display and the support of the lighting layer (50) form a unit.

## Revendications

1. Dispositif d'affichage d'un instrument combiné (100), notamment pour un véhicule automobile, comprenant
- une installation d'affichage électro-optique (10),
- au moins une installation à cadrans (20, 30) pour au moins une installation d'affichage analogique (25, 35), au voisinage de l'installation d'affichage électro-optique (10), un segment (20a, 30a) de l'installation à cadrans recouvrant au moins un segment (10a, 10b) de l'installation d'affichage électro-optique (10), et
- une couche éclairante (50) prévue sur l'installation à cadrans (20, 30), permettant d'éclairer au moins partiellement le segment (20a, 30a) recouvrant l'affichage électro-optique de l'installation à cadrans (20, 30) ainsi que le reste (20b, 30b) de l'installation à cadrans (20, 30),
**caractérisé en ce que**
l'installation d'affichage électro-optique (10) comporte des zones d'affichage situées en dehors de son chevauchement par l'installation à cadrans (20, 30).

2. Dispositif d'affichage selon la revendication 1,
**caractérisé en ce que**
l'installation d'affichage électro-optique (10) présente une zone d'affichage (11; 13) dans son segment (10a; 10b) recouvert par l'installation à cadrans (20; 30).

3. Dispositif d'affichage selon la revendication 2,
**caractérisé en ce que**
le segment (20 ; 30a) de l'installation à cadrans (20 ; 30) qui recouvre l'installation d'affichage électro-optique (10) est, par zones, transparent et/ou translucide et/ou découpé de façon à influencer l'image de l'installation à cadrans (20 ; 30) apparaissant à travers la zone d'affichage (11 ; 13) de l'installation d'affichage électro-optique (10).

4. Dispositif selon l'une quelconque des revendications précédentes,
**caractérisé en ce que**
l'installation à cadrans (20 ; 30) comporte un disque transparent en matière plastique (22 ; 32) et une couche formant cadran (21 ; 31) imprimée sur une face.

5. Dispositif d'affichage selon la revendication 4,
**caractérisé en ce que**
la couche formant cadran (21 ; 31) est imprimée sur la face non située du côté de l'observateur.

6. Dispositif d'affichage selon la revendication 5,
**caractérisé en ce que**
la couche éclairante (50) est appliquée sur la couche formant cadran (21 ; 31).

7. Dispositif selon l'une quelconque des revendications précédentes,
**caractérisé en ce que**
la couche éclairante (50) est une couche lumineuse électroluminescente.

8. Dispositif d'affichage selon la revendication 7,
**caractérisé en ce que**
la couche lumineuse électroluminescente (50) est intégrée dans une feuille électroluminescente ayant de préférence une épaisseur de l'ordre de 0,3-0,6 mm.

9. Dispositif selon l'une quelconque des revendications précédentes,
**caractérisé en ce que**
l'installation d'affichage analogique (25 ; 35) comporte une aiguille mécanique qui balaie un plan situé au-dessus de l'installation à cadrans (20, 30) et tourné vers l'observateur.

10. Dispositif selon l'une quelconque des revendications précédentes,
**caractérisé en ce que**
l'installation d'affichage électro-optique (10) comporte un affichage à diodes lumineuses et/ou un affichage à fluorescence sous vide.

11. Dispositif selon l'une quelconque des revendications précédentes,
**caractérisé en ce que**
l'installation d'affichage électro-optique (10) comporte un affichage à cristaux liquides.

12. Dispositif d'affichage selon la revendication 11,
**caractérisé en ce que**
la couche de filtre de polarisation de l'affichage à cristaux liquide et le support de la couche luminescente (50) forment un ensemble.
